(19) Europäisches Patentamt
European Patent Office
Office européen des brevets

(11) Veröffentlichungsnummer: **0 454 983 A1**

(12) **EUROPÄISCHE PATENTANMELDUNG**

(21) Anmeldenummer: **91104304.0**

(51) Int. Cl.5: **F16F 1/36**, C08J 5/24

(22) Anmeldetag: **20.03.91**

(30) Priorität: **24.04.90 DE 4012946**

(43) Veröffentlichungstag der Anmeldung:
**06.11.91 Patentblatt 91/45**

(84) Benannte Vertragsstaaten:
**AT BE CH DE ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Schuermann, Helmut, Dr.**
**Burgunder Strasse 13**
**W-6701 Maxdorf(DE)**
Erfinder: **Cramer, Edwin, Dr.**
**Hohenzollernstrasse 87 a**
**W-6700 Ludwigshafen(DE)**
Erfinder: **Reintjes, Frank**
**In den Weingaerten 19**
**W-6520 Worms(DE)**

(54) **Blattfedern aus Faserverbundwerkstoffen.**

(57) Blattfedern für Transportfahrzeuge bestehen aus 30 - 70 Vol.-% unidirektional orientierter Verstärkungsfasern und 70 - 30 Vol.-% eines gehärteten Vinylesterurethanharzes.

EP 0 454 983 A1

Die Erfindung betrifft Blattfedern auf Basis von Vinylesterurethanharzen.

Blattfedern für Transportfahrzeuge werden in zunehmendem Maße aus Faser/Kunststoff-Verbundwerkstoffen hergestellt, wobei in eine Kunststoffmatrix in Längsrichtung ausgerichtete unidirektionale Verstärkungsfasern eingelagert sind. Gegenüber Stahlblattfedern haben sie den Vorteil des wesentlich geringeren Gewichts und des gutmütigen Versagensverhaltens.

Als Kunststoffmatrix für die Faserverbundwerkstoffe wurden bisher praktisch ausschließlich Epoxidharze eingesetzt. Diese haben jedoch den Nachteil, daß die Härtung verhältnismäßig lang dauert, so daß lange Zykluszeiten erforderlich sind. Außerdem müssen wegen toxischer Härtungsmittel in vielen Fällen besondere Vorkehrungen bei der Verarbeitung getroffen werden. Auch die radikalisch härtbaren Vinylesterharze (Umsetzungsprodukte von Polyepoxiden mit Methacrylsäure) wurden schon als geeignete Kunststoffmatrix vorgeschlagen. Hier sind jedoch die Haftfestigkeit Faser/Matrix bei hoher Federbeanspruchung sowie die dynamische Belastbarkeit nicht ausreichend.

Der Erfindung lag daher die Aufgabe zugrunde, Blattfedern aus Hochleistungsverbundwerkstoffen bereitzustellen, die in der genannten Hinsicht verbessert sind.

Diese Aufgabe wird erfindungsgemäß dadurch gelöst, daß als Kunststoff ein Vinylesterurethanharz eingesetzt wird.

Gegenstand der Erfindung sind demzufolge Blattfedern für Transportfahr-Zeuge, enthaltend
30 bis 70 Vol.-% unidirektional orientierte Verstärkungsfasern und
70 bis 30 Vol.-% eines gehärteten Vinylesterurethanharzes.

Vorzugsweise enthält das gehärtete Vinylesterurethanharz

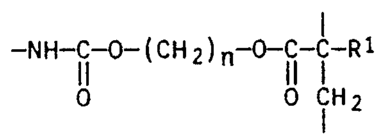

-Gruppen
(mit n = 2 oder 3 und $R^1$ = H oder $CH_3$)
und keine

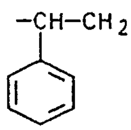

-Gruppen

Besonders bevorzugte Blattfedern zeichnen sich durch folgende Eigenschaften aus:

| | |
|---|---|
| Interlaminare Scherfestigkeit ILS | > 70 [MPa], vorzugsweise > [MPa] |
| 90° - Zugfestigkeit | > 55 [MPa], vorzugsweise > 70 [MPa] |
| Glasübergangstemperatur | > 130° C, vorzugsweise > 150° C. |

Als Verstärkungsfasern kommen übliche anorganische oder organische Fasern, bevorzugt solche aus Glas, Kohlenstoff oder aromatischem Polyamid in Frage. Wesentlich ist, daß die Fasern in Federlängsrichtung orientiert sind. Bevorzugt sind Fasergelege, insbesondere unidirektional orientierte Glasfasern, sowie Fasergewebe. Die erfindungsgemäßen Prepregs enthalten 30 bis 70, vorzugsweise 50 bis 60 Vol.-% Verstärkungsfasern.

Zu den Ausgangsmaterialien zur Herstellung der Vinylesterurethanharze ist folgendes zu sagen:

Isocyanate

Zur Herstellung der Vinylesterurethanharze im Sinne der Erfindung kommen alle bekannten aliphatischen, cycloaliphatischen und aromatischen Polyisocyanate mit mindestens 2 Isocyanatgruppen pro Molekül in Frage. Beispielhaft für geeignete Isocyanate seien genannt: 4,4-Diphenylmethandiisocyanat (MDI), Hexamethylendiisocyanat, (HDI), Trimethylhexyldiisocyanat (TMDI), Cyclohexyldiisocyanat, Dicyclopentadiendimethylen-diisocyanat, Diisocyanato-diphenylether, Diisocyanatonaphthalin, Diphenylmethan-diisocyanat und Diisocyanato-toluol (TDI) mit ihren Isomerengemischen, Isophorondiisocyanat (IPDI), Dicyclohexyl-diisocyanat, Polyphenylenpolymethylenpolyisocyanate (Roh-MDI); Triisocyanato-cyclohexan, Triisocyanato-toluol, Triisocyanato-naphthalin, Triisocyanatobiphenyl, Triisocyanato-trimethylbenzol, Triisocyanato-diphenylmethan, Triisocyanato-methyldiphenylmethan, Triisocyanato-triphenylmethan, Triisocyanato-diphenylether, Tetraisocyanato-diphenylsulfid; urethangruppenhaltige, präpolymere Polyisocyanate wie z.B. das Reaktionsprodukt aus Trimethylolpropan und Diisocyanatotoluol; trimerisierte, Isocyanuratgruppen enthaltende Polyisocyanate z.B. auf Basis HDI, Diphenylmethan-disocyanat und Isophorondiisocyanat; präpolymere Polyisocyanate, die dargestellt werden durch Reaktion von Polyisocyanaten mit einem Unterschuß an Polyepoxiden in Gegenwart geeigneter Katalysatoren; Polyisocyanate, die durch Vorreaktion eines Teils der NCO-Gruppen Carbodiimid- und Urethonimineinheiten enthalten; sowie Präpolymere, die neben NCO-Gruppen Urethdioneinheiten enthalten.

Bevorzugte Isocyanate sind 4,4'-Diphenylmethandiisocyanat sowie das Isomerengemisch aus 2,2'- und 4,4'-Diphenylmethandiisocyanat.

Mehrwertige Alkohole

Geeignete mehrwertige Alkohole sind: aliphatische Diole, wie Ethandiol-1,2, Propandiol-1,2, Butandiol-1,4, Dipropylenglykol, Neopentylglykol, Trimethylolpropan, Pentaerythrit; alicyclische Diole, wie hydriertes Bisphenol A, Cyclohexandiol, Cyclohexandimethanol und Tricyclohexandimethanol; Phenole wie Bisphenol A oder Resorcin; alkoxylierte Derivate von Bisphenolen wie z.B. Bisphenol A, Bisphenol S oder Bisphenol F; aliphatische oder aromatische Polyetherole mit Molekulargewichten bis 5000, z.B. Polyethylenglykol oder Polypropylenglykol; sowie Polyesterole, wobei sowohl gesättigte als auch ungesättigte hydroxyterminierte Polyester in Frage kommen. Grundsätzlich können auch Aminole, wie Ethanolamin, Propanolamin, Diethanolamin, Triethanolamin und Aminophenole mit den Isocyanaten umgesetzt werden. Bevorzugt ist Dipropylenglykol, gegebenenfalls im Gemisch mit Polypropylenglykol.

Mehrwertige Amine

Als Polyamine können sowohl aliphatische als auch aromatische Amine eingesetzt werden. Beispielhaft seien genannt: Ethylendiamin, Diethylentriamin, Bis-(4-aminocyclohexyl)-methan, Diaminodiphenylmethan, Diaminodiphenylsulfon. Besonders geeignete Amine sind langkettige Amine mit Molekulargewichten von 150 bis 5000. Dazu zählen Etherdiamine wie 4,7-Dioxadecan-1,10-diamin oder Verbindungen der allgemeinen Formel

$H_2N-(C_3H_6O)_m-C_3H_6-NH_2$,

wobei m Zahlen von 2 bis 80 bedeutet, oder Verbindungen der allgemeinen Formel

$H_2N-C_3H_6-O-[(CH_2)_4O]_n-C_3H_6-NH_2$,

wobei n Zahlen von 5 bis 80 bedeutet; weiterhin die Aminobenzoesäureester und Anthranilsäureester von Diolen wie z.B. Ethylenglykol, Propylenglykol, Polyethylenglykol, Polypropylenglykol, Polybutadienglykol, Polycaprolactonglykol oder Polytetramethylenetherglykol. Die besonders bevorzugten Aminobenzoesäureester von Polytetramethylenetherglykol haben folgende Struktur:

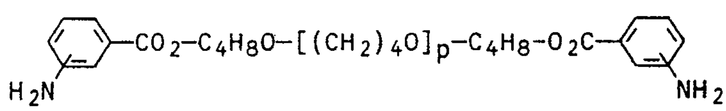

wobei p Zahlen von 5 bis 80 bedeutet.

Hydroxyalkyl-(meth-)acrylate

Zum Aufbau der endständigen Doppelbindungen im Vinylesterurethan werden Hydroxyalkyl-(meth-)acrylate mit den aus A, $B_1$ und $B_2$ hergestellten, Isocyanatgruppen enthaltenden Verbindungen umgesetzt. Hydroxyalkyl(meth-)acrylate werden durch folgende allgemeine Formel beschrieben:

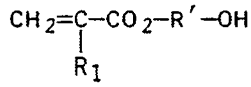

wobei $R_1$ = H oder $CH_3$
und R' eine Alkylengruppe bedeuten. Hydroxyalkyl(meth-)acrylate werden durch Umsetzung von (Meth-)Acrylsäure mit Alkylenoxiden wie Ethylen- oder Propylenoxid hergestellt. Geeignete Hydroxyalkyl-(meth-)acrylate im Sinne der Erfindung sind ferner Glycerindi-(meth-)acrylate, Trimethylolpropan-di(meth-)acrylate und Pentaerythrittri-(meth-)acrylate. Bevorzugt sind Hydroxypropyl(meth-)acrylat und Hydroxyethyl(meth-)acrylat.

Zur Herstellung der Vinylesterurethanharze sind verschiedene Verfahren möglich. Einmal kann zunächst das Isocyanat A mit dem Hydroxyalkyl-(meth)acrylat C im Molverhältnis von etwa 1:0,5 bis 1:3 vorreagiert und gegebenenfalls anschließend mit dem mehrwertigen Alkohol B1 und/oder dem mehrwertigen Amin B2 umgesetzt werden. In einem zweiten Verfahren werden die Komponenten A, B1 und ggf. B2 im Verhältnis A: (B1 + B2) von 100:0 bis 100:300 vermischt und bei 40 bis 110 °C umgesetzt. Anschließend wird die zur Absättigung der freien Isocyanatgruppen notwendige Menge den Hydroxyalkyl-(meth)acrylat C zugefügt. Eine weitere Möglichkeit besteht darin, die Komponenten A, B1, B2 und C gemeinsam in einer Eintopfreaktion zum Vinylesterurethanharz umzusetzen. Eventuell vorhandenes, überschüssiges Polyisocyanat reagiert dabei mit dem Hydroxyalkyl(meth)acrylat zu einem verhältnismäßig niedermolekularen Vinylesterurethan, was zur Einstellung der Viskosität des Harzes ausgenutzt werden kann. Man erhält stets ein Gemisch präpolymerer Vinylesterurethane mit unterschiedlicher Kettenlänge und Molekulargewicht. Ein Restgehalt an freien NCO-Gruppen im Vinylesterurethanharz ist in vielen Fällen vorteilhaft, überschüssige NCO-Gruppen können durch chemische Reaktion an OH-aktiven Materialien wie z.B. Glasfasern und Füllstoffen anbinden. Weiterhin kann NCO-haltiges Vinylesterurethanharz mit OH/NH-reaktiven Materialien wie z.B. OH-terminierten ungesättigten Polyestern vernetzen.

Die genannten Umsetzungen können in Substanz oder gegebenenfalls in Monomeren als Lösungsmittel durchgeführt werden. Zur Beschleunigung der Umsetzungen der Isocyanate mit den Alkohol- und Aminoverbindungen können geeignete Katalysatoren, wie sie aus der Polyurethanchemie bekannt sind, eingesetzt werden. Dazu zählen beispielsweise tertiäre Amine wie 1,2-Dimethylimidazol, Diazabicyclooctan, Diazabicyclononan, Triethylendiamin, Metallsalze wie Bleioctoat, Zinnoctoat oder Dibutylzinndilaurat sowie Mischungen von tertiären Aminen und Metallsalzen. Die Katalysatoren werden üblicherweise in Mengen von 0,05 bis 2 Gew.-%, bezogen auf A + B + C, zugegeben. Eine vorzeitige Gelierung der Reaktionsmischung kann durch Zusatz üblicher Inhibitoren wie z.B. Phenothiazin, Hydrochinon, Dimethylhydrochinon, Triphenylphosphit, tert.-Butyl-hydrochinon, Hydrochinonmonomethylether, tert.-Butylbrenzkatechin und p-Benzochinon verhindert werden. Die Inhibitoren werden in Mengen von 0,01 bis 2 Gew.-%, bezogen auf A + B + C, zugesetzt.

Bevorzugt werden zur Herstellung der erfindungsgemäßen Blattfedern monomerfreie Vinylesterurethanharze eingesetzt, insbesondere styrolfreie. In manchen Fällen kann es vorteilhaft sein, zur Einstellung der optimalen Harzviskosität dem Vinylesterurethanharz copolymerisierbare Monomere, vorzugsweise in Mengen von bis zu 60, insbesondere bis zu 20 % seines Gewichts zuzusetzen.

Geeignet sind dabei Vinylverbindungen, wie Styrol, $\alpha$-Methylstyrol, alkylierte Styrole, Divinylbenzol, Vinylacetat und Vinypyridin; Allylverbindungen, wie Diallylphthalat und Triallylcyanurat; Acryl- und Methacrylverbindungen, wie Acrylnitril, (Meth)acrylamid, Methyl(meth)acrylat, Ethylacrylat, Propylacrylat, Butylacrylat, Ethylhexylacrylat, Neopentylglykolacrylat, Ethylenglykoldi(meth)acrylat, Propylenglykoldi(meth)-acrylat, Butandioldiacrylat, Glycerin(meth)crylate, Hydroxyalkyl(meth)acrylate, alkoxilierte Bisphenol A-di-(meth)acrylate und Glycidylmethacrylat, sowie niedermolekulare Maleinimide, wie N-Phenylmaleinimid, N-Alkylmaleinimide und N-Cyclohexylmaleinimid.

Bei der Verwendung von Styrol als Monomer müssen besondere Vorkehrungen bei der Herstellung der Blattfedern getroffen werden, um die Arbeitsplatzkonzentration möglichst niedrig zu halten. Andererseits erlaubt die Verwendung styrolhaltiger Harze eine höhere Tränkgeschwindigkeit.

Dem Vinylesterurethanharz können in Mengen von 2 bis 50 %, bezogen auf sein Gewicht, andere härtbare Harze, wie ungesättigte Polyester-, Vinylester-, Bismaleinimid- oder Epoxid-Harze zugemischt werden. Zum Zweck der Zähmodifizierung kann das Vinylesterurethanharz 2 bis 40 %, bezogen auf sein Gewicht, eines Thermoplasten, wie Polyamid, Polyester und Polyethersulfon oder eines Kautschuks enthalten.

Zur Aushärtung der Vinylesterurethanharze kommen übliche Polymerisationsinitiatorenin Frage, die dem Harz in Mengen von 0,1 bis 10 Gew.-%, vorzugsweise von 0,5 bis 3 Gew.-%, zugesetzt werden. Als

Radikale liefernde Initiatoren seien beispielhaft genannt: Benzoylperoxid, tert.-Butylperoctoat, tert.-Butylperbenzoat, tert.-Butylperoxid, Dicumylperoxid, tert.-Butylcumylperoxid, Di(4-methylbenzoyl)peroxid, Di(tert.-butyl)peroxid oder organische Verbindungen mit einer labilen Kohlenstoff-Kohlenstoff-Bindung.

Zur Herstellung der Blattfedern aus dem Vinylesterurethanharz können verschiedene Verfahren angewandt werden:
Die Vinylesterurethanharze werden nach dem Prepreg-Verfahren mit Verstärkungsfasern kombiniert. Dieses Verfahren ist z.B. in US-A 3 784 433, beschrieben. Man stellt dabei erst einen Vinylesterurethanharz-Film, dessen Flächengewicht vorzugsweise 10 bis 400 $g \cdot m^{-2}$ beträgt, her und legt auf diesen Film das Verstärkungsfasergelege und darauf gegebenenfalls wieder einen Harzfilm. Die Lagen werden mit Hilfe eines Kalanders bei Temperaturen zwischen 50 und 150 °C und Drücken zwischen 1 und 10 bar zu Prepregs verpreßt. Man kann aber auch die Prepregs direkt herstellen, indem man Verstärkungsfasergelege durch ein Harzbad zieht und überschüssiges Harz mittels einer Breitschlitzdüse abstreift.

Die Prepregs werden dann zurechtgeschnitten und parallel oder in verschiedenen Winkeln orientiert übereinanderdrapiert. Die Härtung erfolgt entweder in einem Autoklaven bei Drücken zwischen 2 und 10 bar oder in Pressen bei Drücken zwischen 10 und 100 bar. Die Temperatur beträgt in beiden Fällen 80 bis 200 °C.

Das Prepregverfahren ist besonders zur Herstellung von Parabelfedern geeignet.

Pulforming

Bei diesem Verfahren werden Faserbündel durch eine Tränkvorrichtung gezogen, dabei mit Harz beladen und dann in einer Düse zu dem gewünschten Querschnitt verformt. Direkt anschließend werden sie in einem Preßwerkzeug abgelegt und gehärtet. Dieses Verfahren ist zur Herstellung von Hyperbelfedern und Rechteckfedern bevorzugt.

Resin-Transfer-Molding

Bei diesen Verfahren werden die Fasern in einer Form abgelegt, die Form wird geschlossen und das Harz injiziert. Das Aushärten erfolgt direkt in der Form.

Die erfindungsgemäßen Blattfedern können in verschiedenen Größen hergestellt werden und sowohl in Lastkraftwagen und Personenautos als auch für Eisenbahnwaggons eingesetzt werden.

Beispiele

A. Herstellung des Vinylesterurethanharzes
300 g des Isomerengemisches von Diphenylmethandiisocyanat werden mit 1 ml Dibutylzinndilaurat versetzt und bei 40 °C werden 157 g Hydroxypropylmethacrylat zugetropft. Danach gibt man 15 g Dipropylenglykol zu, läßt die restlichen Isocyanatgruppen mit weiteren 157 g Hydroxypropylmethacrylat reagieren und rührt nach bis der Restisocyanatgehalt unter 0,1 % gesunken ist. Danach werden 0,61 g Dicumylperoxid und 200 ppm eines phenolischen Inhibitors in das Harz (Viskosität 390 mPas bei 100 °C) eingerührt.
B. Herstellung von Blattfedern
In einem ersten Schritt werden Faserbänder mit dem Harz imprägniert, d.h. sogenannte Prepregs (vorimprägnierte Gelege) hergestellt. Dazu werden Glasfaserrovings z.B. in einer Feinheit von 2400 tex zu einem Band, ca. 5 mm schmaler als die zu fertigende Federbreite zusammengelegt. Dieses Band wird durch ein Tränkbad gezogen, in dem sich das flüssige Vinylester-Urethanharz befindet. Die Ziehgeschwindigkeit beträgt etwa 10 m/min. Zur Einstellung der zu einer guten Benetzung notwendigen niedrigen Harzviskosität wird das Tränkbad auf 60 °C beheizt. Am Ende der Tränkbades befinden sich Abquetschvorrichtungen, wo der benötigte Faservolumenanteil, etwa 50 Vol.-%, eingestellt wird.

Nachdem eine Trennfolie auf dem vorimprägnierten Band abgelegt wurde, wird das Band aufgerollt und bis zur Weiterverarbeitung bei Temperaturen um 0 °C zwischengelagert.

Blattfedern mit einem parabelförmigen Dickenverlauf haben von allen Blattfedergeometrien die höchste Energiespeicherfähigkeit. Um mit GFK-Federn einen parabelförmigen Dickenverlauf zu erhalten, müssen Prepreg-Lagen unterschiedlicher Länge gestapelt werden. Dazu werden die Prepregs von den Rollen abgezogen und mittels einer numerisch gesteuerten Stapelmaschine auf die vorausberechnete Kontur gestapelt. Dieser Prepregstapel wird in einer Preßwerkzeug eingebracht und bei ca. 120 °C verpreßt. Das Preßwerkzeug bleibt so lange geschlossen, bis der Prepregstapel ausgehärtet ist. Nach dem Entformen der Blattfeder folgt die Nachbearbeitung, d.h. Ablängen, Entfernen von Schwimmhäuten, Bohren von Befestigungslöchern. Es schließt sich die Nachhärtung bei 170 °C in einem Umluftofen an.

Gemessene Eigenschaften:

| | |
|---|---|
| Interlaminare Scherfestigkeit: | 110 [MPa] |
| 90 ° -Zugfestigkeit: | 75 [MPa] |
| Glasübergangstemperatur: | 160 ° C. |

## Patentansprüche

1. Blattfedern für Transportfahrzeuge, enthaltend

   30 bis 70 Vol.-% unidirektional orientierte Verstärkungsfasern und

   70 bis 30 Vol.-% eines gehärteten Vinylesterurethanharzes.

2. Blattfedern nach Anspruch 1, dadurch gekennzeichnet, daß das gehärtete Vinylesterurethanharz

   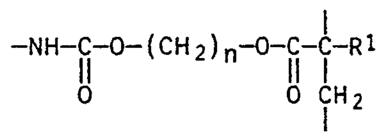

   -Gruppen
   (mit n = 2 oder 3 und $R^1$ = H oder $CH_3$)
   enthält.

3. Blattfedern nach Anspruch 1, dadurch gekennzeichnet, daß das gehärtete Vinylesterurethanharz keine

   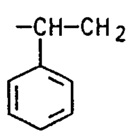

   -Gruppen enthält.

4. Blattfedern nach Anspruch 1, gekennzeichnet durch folgende Eigenschaften:

   | | |
   |---|---|
   | Interlaminare Scherfestigkeit ILS | > 70 [MPa] |
   | 90 ° - Zugfestigkeit | > 55 [MPa] |
   | Glasübergangstemperatur | > 130 ° C |

5. Blattfedern nach Anspruch 1, dadurch gekennzeichnet, daß das Vinylesterurethanharz hergestellt wurde durch Umsetzung von
   A. einem polyfunktionellen Isocyanat,
   B1. gegebenenfalls einem mehrwertigen Alkohol und/oder
   B2. gegebenenfalls einem mehrwertigen Amin,
   C. einem Hydroxyalkyl-(meth)acrylat,
   wobei das Gewichtsverhältnis A : ($B_1$ + $B_2$) zwischen 100:0 und 100:300 betrug und das Äquivalentverhältnis Hydroxyalkyl-(meth)acrylat zu den freien Isocyanatgruppen des Reaktionsprodukts A + $B_1$ + $B_2$ zwischen 3:1 und 1:2 lag.

Europäisches Patentamt

# EUROPÄISCHER RECHERCHENBERICHT

Nummer der Anmeldung

**EP 91 10 4304**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 744 390 (BASF)<br>* Patentanspruch; Zusammenfassung; Seite 4, Zeilen 25-29 *<br>– – – – – | 1 | F 16 F 1/36<br>C 08 J 5/24 |

| RECHERCHIERTE SACHGEBIETE (Int. Cl.5) |
|---|
| F 16 F<br>C 08 J<br>C 08 K<br>C 08 G |

Der vorliegende Recherchenbericht wurde für alle Patentansprüche erstellt

| Recherchenort | Abschlußdatum der Recherche | Prüfer |
|---|---|---|
| Den Haag | 08 August 91 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument